# EUROPEAN PATENT APPLICATION

(11) **EP 4 238 912 A1**
(43) Date of publication of application: **06.09.2023**
(21) Application number: 23159699.0
(22) Date of filing: 02.03.2023
(51) Int. Cl.: B65G 53/60, B01D 46/24

(54) **SEPARATION DEVICE FOR GRANULAR MATERIAL**

(30) Priority: 02.03.2022 IT 202200003944
(71) Applicant: Pegaso Industries S.p.A., 35010 Borgoricco (PD) (IT)
(72) Inventor: PIVA, Rinaldo, 35010 Borgoricco (PD) (IT); ZANON, Daniele, 35010 Massanzago (PD) (IT); BINOTTO, Nicolò, 35010 S. Giustina in Colle (PD) (IT)
(74) Representative: Susanetto, Carlo

(57) **Abstract**

A separation device (10) for granular material comprises a container (11), in which there are defined an inlet opening (17) for a pneumatic transport line (2), through which the granular material is transported by a transport gas inside the container, and an outlet opening (18) through which the transport gas is discharged from the container (11).

The separation device (10) further comprises a filter (20) which is provided inside the container between the inlet opening (17) and the outlet opening (18) in order to separate the granular material from the transport gas and to retain it in the container (11).

The filter (20) has a tubular form which extends from the outlet opening (18) towards the interior of the container (11).

## Description

### Technical field

The present invention relates to a separation device for granular material which is inserted in a pneumatic transport line.

### Technological background

The present invention is used particularly, though not exclusively, in the field of processing plastics materials, where it is known to move quantities of granular material between the various stations of the production process by means of pneumatic transport.

Pneumatic transport systems are known per se and, in general terms, provide for moving the granular material by means of a gas flow which is urged inside a pipe at suitable speeds so as to prevent sedimentation of the granular material. These systems further provide for the granular material to be separated from the gas flow in the region of the predefined arrival location.

To this end, it is known to pass the gas flow with the granular material inside a container which has a greater passage cross-section than the pipe. In this manner, the speed of the gas is reduced and is no longer capable of dragging the granular material which falls by gravitational force onto the bottom of the container. Furthermore, at the outlet of the container, there is normally provided a filter which provides for retaining inside the container the material granules which are still being dragged by the gas flow, generally the material granules with smaller dimensions, such as powders.

As mentioned above, these pneumatic transport systems are widely used in the field of processing plastics materials and an example of use which is particularly representative is constituted by charging polymer granular material in a moulding plant or a drying plant.

The Applicant has observed that, in the conventional pneumatic transport systems, the inlet pipe into the container is open inside the container at a lateral wall thereof, while the outlet pipe is positioned at the top of the container, at an openable cover of the container. In this configuration, the filter is generally positioned in the region of the support flange of the cover on the container and extends so as to cover the entire planar section of the container.

However, the Applicant has observed that the filter used to separate the granular material inside the destination container of the pneumatic transport line is often the cause of disadvantages which can affect the correct operation of the filtering and generally the pneumatic transport and the subsequent processing operations of the granular material.

A first disadvantage is the difficulty of maintaining the filter which requires that the cover be raised or removed in order to be able to access the filter and to extract it from the container.

Furthermore, the filter, given the dimensions, may be cumbersome and difficult to handle.

The operation for correctly positioning the filter inside the container may be equally difficult.

Furthermore, a filter which is configured in this manner requires a seal which extends over the entire external perimeter of the filter, substantially corresponding to the perimeter of the container, therefore with relatively great dimensions which can readily lead to incorrect positioning of the seal and resultant damage thereto when the filter and the cover positioned above the filter are closed.

In the present description and the appended claims, the term "granular material" is intended to be understood to refer to a plurality of solid elements which are different and separate from each other and which have suitable dimensions and formation in accordance with the processing to be carried out and the material used, including powdered or flaked granular material.

Preferably, the granular material is a polymer material.

In particular, the granular material has a generally spherical or cylindrical shape and has a mean grain size between 1 mm and 3 mm.

### Description of the invention

The problem addressed by the present invention is to provide a separation device for granular material and a pneumatic transport plant for granular material which are structurally and functionally configured to at least partially overcome one or more of the disadvantages set out above with reference to the cited prior art.

This problem is solved by the present invention by means of a separation device for granular material and a pneumatic transport plant for granular material which are constructed according to the appended claims.

In a first aspect thereof, therefore, the invention is directed towards a separation device for granular material comprising a container and a filter.

Preferably, there are defined in the container an inlet opening for a pneumatic transport line, through which the granular material is transported by a transport gas inside the container, and an outlet opening for the pneumatic transport line, through which the transport gas is discharged from the container.

Preferably, the filter is provided inside the container between the inlet opening and the outlet opening in order to separate the granular material from the transport gas and to retain the granular material in the container.

Preferably, the filter has a tubular configuration which extends from the outlet opening towards the interior of the container.

Owing to these features, the filter is more compact and can be handled much more easily, simplifying the maintenance operations.

Furthermore, the tubular configuration allows the provision of a greater filtering surface for the same spatial requirement, improving the efficiency of the separation of granular material.

Furthermore, this configuration allows the filter to be positioned directly around the outlet opening, requiring, in order to ensure the peripheral fluid-tightness thereof with respect to the passage of the transport gas, seals with relatively small dimensions which are readily available, which can readily be positioned and are therefore less subjected to damage during the steps of extracting and inserting the filter.

In a second aspect thereof, the invention is directed towards a pneumatic transport plant for granular material, comprising a pneumatic transport line and a separation device for granular material which is associated with the pneumatic transport line, in which the separation device for granular material is constructed according to the first aspect.

In at least one of the above-mentioned aspects, the present invention may have one or more of the preferred features described below.

In some embodiments, the filter comprises a support structure and a filtering net which is fixed to the support structure.

The support structure may be formed by a framework of metal rods which are arranged to leave wide areas closed only by the filtering net so as to maximize the filtering surface.

In one embodiment, the support structure may be completely or partially formed by a metal sheet which is provided with wide holes.

The filtering net is made from a metal material and has mesh with suitable dimensions in accordance with the granular material to be separated.

In one embodiment, the support structure extends so as to pass inside the container between the outlet opening and a wall of the container, preferably said wall is located opposite the outlet opening.

In this manner, the filter may advantageously be fixed so as to be supported on the container at two spaced-apart locations, increasing the stability and the mechanical strength of the filter.

Preferably, the filter is fixed so as to be supported on the container at the end regions longitudinally opposite the filter.

In one embodiment, the support structure extends inside the container between the outlet opening and a support opening which is formed in the opposite wall of the container.

Preferably, the support structure is received so as to pass through the support opening.

In this manner, the stability of the filter inside the container is further increased. Furthermore, in one embodiment, the filter can be both inserted in the container and extracted from the container through the support opening.

It is thereby possible to remove the filter from the container, for example, for maintenance operations, and subsequently also to insert it into the container without opening the cover, making these operations faster and more reliable.

The filter may have a tubular form of any suitable shape, for example, prismatic or cylindrical or frustoconical, and a cross-section which is also suitable, for example, circular, elliptical, oval or polygonal.

Preferably, this form is substantially cylindrical with a circular cross-section.

In one embodiment, the separation device comprises a filter cleaning device which is positioned inside the filter and which is configured to clean the filtering net.

In one embodiment, the cleaning device comprises at least one blowing element which is positioned inside the filter and which is directed towards the filtering net.

It is thereby possible to advantageously purge the filter of any particulate which is embedded between the mesh of the filtering net without removing it from the container.

Preferably, the blowing element is connected to a compressed air circuit. Preferably, the blowing element comprises a drilled pipe which extends inside the filter, more preferably inside the support structure of the filter.

Preferably, the drilled pipe extends substantially axially inside the filter.

In other embodiments, which are not necessarily alternative embodiments, the blowing element may comprise fixed or movable nozzles.

Preferably, the cleaning device is fixed to the filter, though in a removable manner, and is inserted inside the filter through the end corresponding to the support opening of the container.

In one embodiment, the container comprises a lateral wall and a cover which closes the container at the upper side.

In one embodiment, the container comprises a first ring which forms a first portion of the lateral wall of the container and a second ring which forms a second portion of the lateral wall of the container.

Preferably, the first ring and the second ring are fixed so as to allow a plurality of angular positionings which are different with respect to the first ring and second ring. More preferably, the first ring and second ring are removably fixed to each other.

Preferably, the first ring and second ring are coaxial with a longitudinal axis of the container.

It may further be noted that the angular positioning of one ring with respect to the other ring is defined in relation to the longitudinal axis of the container. Preferably, the outlet opening is formed in the first ring while the inlet opening is formed in the second ring.

More preferably, the support opening is also formed in the first ring.

In one embodiment, the first ring and second ring are provided with respective support flanges which are intended to abut each other. There are preferably formed on the respective support flanges suitable holes which can be removably engaged with bolts which allow the first ring and second ring to be fixed to each other. The holes are preferably arranged at regular intervals along the respective flanges.

It is thereby possible to angularly stagger the position of the inlet opening and outlet opening so as to allow the connection of the container to the pneumatic transport pipes in the improved plant configuration.

In another aspect thereof, the present invention is directed towards a separation device for granular material comprising:
- a container, in which there are defined an inlet opening for a pneumatic transport line, through which the granular material is transported by a transport gas inside the container, and an outlet opening for the pneumatic transport line, through which the transport gas is discharged from the container,
- a filter which is provided inside the container between the inlet opening and the outlet opening in order to separate the granular material from the transport gas and to retain it in the container.

The container comprises:
- a first ring which forms a first portion of a lateral wall of the container and in which the outlet opening is formed,
- a second ring which forms a second portion of the lateral wall of the container and in which the inlet opening is formed
and the first ring and the second ring are fixed to each other so as to allow a plurality of angular positionings which are different with respect to the first ring and second ring.

### Brief description of the drawings

The features and advantages of the invention will be better understood from the detailed description of a preferred embodiment thereof, which is illustrated by way of non-limiting example with reference to the appended drawings, in which:

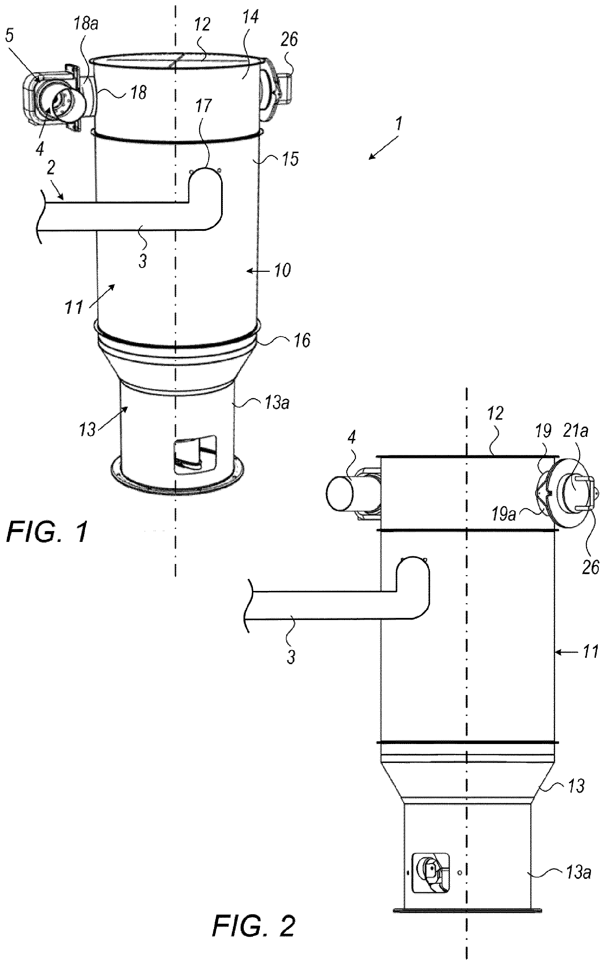

- Figure 1 is a schematic perspective side view of a pneumatic transport plant comprising a separator device for granular material constructed according to the present invention;
- Figure 2 is a schematic perspective side view of the plant of Figure 1 from a different angle,
- Figure 3 is a schematic plan view of the plant of Figure 1, with the cover removed,
- Figure 4 is a longitudinally sectioned view of the plant of Figure 1,

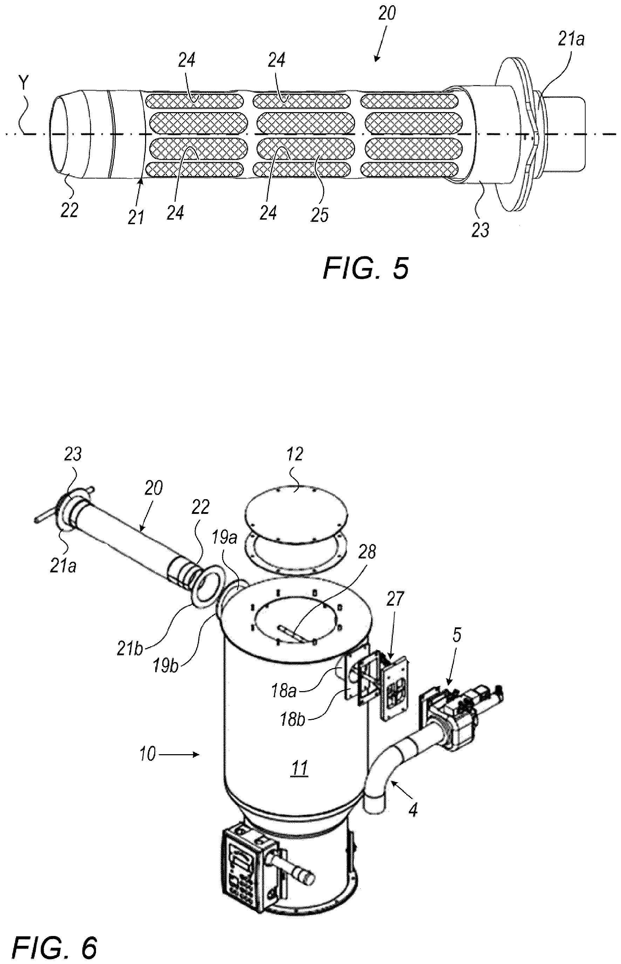

- Figure 5 is a front view of the filter of the plant of Figure 1, and
- Figure 6 is an exploded schematic view of the plant of Figure 1 from an angle opposite the angle of Figure 1.

### Embodiment of the invention

With reference to the appended Figures, there is generally designated 1 a pneumatic transport plant for a granular material which is constructed according to the present invention.

In the preferred embodiment described herein, the pneumatic transport plant 1 is inserted inside a plant for processing plastics materials and, particularly, is associated with a moulding plant for granular polymer material, such as, for example, PET granules, which have to be transported from a storage position (for example, a silo) to a drying hopper, where they are heated and dried before being moulded.

The plant 1 therefore comprises a pneumatic transport line 2 which extends from a silo containing the granular material to be transported (not illustrated) and a separation device 10 for the granular material which is positioned above the drying hopper (also not illustrated) of a drying and moulding plant for plastics materials according to a plant configuration which is conventional per se.

In particular, the pneumatic transport line 2 comprises a first pipe 3 which extends from the storage silo for the granular material (not illustrated) as far as the separation device 10 and a second pipe 4 which extends from the separation device 10 as far as a discharge of the transport gas (not illustrated). The transport gas which flows through the first pipe 3, carrying the granules of material to be moved and then through the second pipe 4, is moved by a fan 5 which is positioned on the second pipe 4 downstream of the separation device 10.

The separation device 10 comprises a container 11 which has a substantially cylindrical form, which extends along a vertical axis X and which is closed at the upper side by a cover 12 and which has a frustoconical base 13 which facilitates the discharge of the granular material which is contained therein from the bottom, and around which there extends a support skirt 13a.

The container 11 is preferably formed by three rings 14, 15 and 16 which are removably fixed to each other so as to allow the adjustment of the mutual angular position with respect to the axis X.

In particular, each ring is connected to the adjacent ring at respective support flanges which are formed on each ring by means of suitable closure devices, for example, a plurality of bolts (not illustrated in the Figure) which are engaged in through-holes which are formed at regular intervals on both support flanges. The first ring 14 forms the upper portion of the container 11 and the cover 12 is supported thereon, the second ring 15 is fixed under the first ring and forms the central portion of the container 11 while the third ring 16 which is fixed under the second ring 15 forms the base 13 of the container 11.

The first pipe 3 opens inside the container 11 through an inlet opening 17 which is formed on the lateral wall of the container 11 at the second ring 15. Preferably, the free end of the first pipe 3 which is introduced into the container 11 is curved towards the bottom of the container.

Still on the lateral wall of the container 11 but in the region of the first ring 14, therefore at a higher level than the inlet opening 17, there is formed an outlet opening 18, from which the second pipe 4 extends.

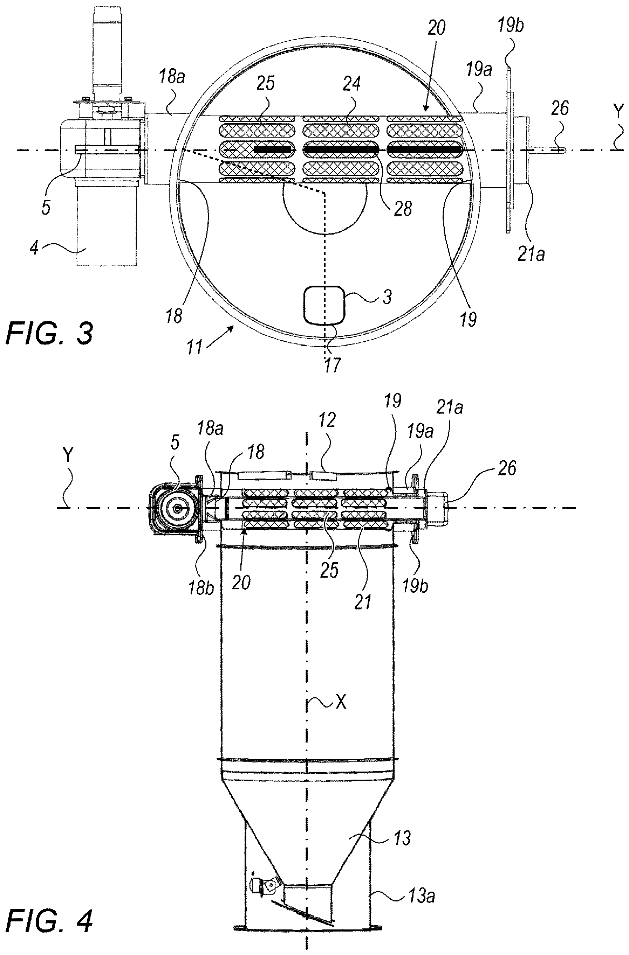

As can be seen in Figure 3, in the present case the first ring 14 and the second ring 15 are fixed to each other in such a manner that the inlet opening 17 and the outlet opening 18 are angularly staggered with respect to the axis X by approximately from 110° to 120°. In order to vary the angular position between the first ring 14 and the second ring 15, it is possible to disconnect the two rings, to reposition them by rotating one ring with respect to the other about the axis X and then to fix them again.

There is further mounted inside the container 11 a filter 20 which is configured to separate the granular material from the transport gas and to retain it in the container 11.

The filter 20 has a tubular form with a substantially circular cross-section and extends along a longitudinal axis Y, which is substantially horizontal, between the outlet opening 18 and a support opening 19, which is also formed in the first ring 14 of the container 11, in a position spaced apart from the outlet opening 18.

The filter 20 comprises a support structure 21 which extends between a first end region 22 of the filter 20 and a second end region 23 of the filter 20 which are longitudinally opposite each other and which, in the central region thereof between the two end regions 22, 23, has wide through-openings 24.

A filtering net 25 for covering the openings 24 is fixed around the support structure 21, particularly around the central region thereof.

The filter 20 is longitudinally open at the first end region 22 thereof while, in the second end region 23 thereof, it is closed by a closure cap 21a.

The filter 20 is fixed so as to be supported on the container 11 at the end regions 22, 23 which are supported in the support opening 19 and in the outlet opening 18, respectively.

In particular, the filter 20 is configured to be inserted in the container 11 and extracted therefrom through the support opening 19. Therefore, there is provided at the closure cap 21a a handle 26 in order to facilitate the movement of the filter 20 by an operator.

Furthermore, in order to facilitate the insertion of the first end region 22 in the outlet opening 18, the first end region 22 is advantageously tapered with a conical profile.

Preferably, in order to improve the stability of the filter 20 in the container 11, there are provided at the outlet opening 18 and the support opening 19 respective support sleeves 18a and 19a which extend over a short section outside the container 11. Furthermore, the support sleeves 18a, 19a are provided with a respective flange 18b and 19b which are provided for attachment to the fan 5 and the closure cap 21a, respectively.

A seal 21b is inserted between the flanges of the support sleeve 19a and the closure cap 21a.

At the outlet opening 18, however, the fluid-tightness between the filter 20 and the container 11 can be ensured without any need for a seal as a result of the conical connection being provided between the first end region 22 and the support sleeve 18a.

Inside the filter 20, there is further provided a cleaning device 27 which comprises a drilled pipe 28 which extends axially inside the support structure 21 through the support opening 19 and which is selectively connected to a compressed air circuit so as to constitute a blowing element which can emit air jets towards the filtering net 25 in an outward direction, which air jets can be used to blow off any material granules which, in a state embedded in the mesh of the filtering net 25, obstruct the passage of the transport gas thereof.

The pneumatic transport plant 1 operates in the following manners.

The granular material present in the storage silo, as a result of the intake action of the fan 5, is brought by the transport gas along the first pipe 3 as far as the interior of the container 11. There, as a result of the speed reduction of the transport gas (because the internal cross-section of the container 11 is much greater than the passage cross-section of the first pipe 3) and also the downward orientation of the free end of the first pipe 3, the granular material, being heavier, falls with gravitational force onto the bottom of the container 11, accumulating on the base 13, becoming separated from the transport gas which in turn is sent back towards the outlet opening 18 of the container 11.

Along the path thereof towards the outlet opening 18, the transport gas necessarily has to pass through the filter 20, passing through the filtering net 25 which provides for retaining any residual granules of material (typically the lightest fraction) which are carried by the transport gas.

The transport gas, once it has passed the filter 20, is urged by the fan 5 along the second pipe 4 as far as the discharge.

With suitable regularity, the cleaning device 27 which emits compressed air jets through the drilled pipe 28 towards the filtering net 25 is actuated, freeing it from any granules which obstruct the passage of the transport gas.

In the case of maintenance, the filter 20 is removed from the container 11 through the support opening 19 by means of the handle 26. It will be noted that this operation does not require per se the removal of the cover 12 but only the disconnection of the filter 20 from the support sleeve 19a.

The filter 20 is inserted into the container 11 by fitting the first end region 22 through the support opening 19 as far as the outlet opening 18, where it abuts against the support sleeve 18a.

The filter 20 is then fixed to the container 11 by fixing the flange of the closure cap 20 to the flange 19b of the support sleeve 19a.

As a result of the separation device 10 for granular material, it is therefore possible to separate granular material in a pneumatic transport line effectively and using a filter which has a great filtering surface and which, at the same time, is simple to manipulate during the operations of extraction and insertion to/from the container.

The person skilled in the art will know how to apply suitable variants to the present invention in accordance with any specific requirements, all being included within the scope of protection defined by the appended claims.

## Claims

1. Separation device (10) for granular material comprising:
- a container (11), in which there are defined an inlet opening (17) for a pneumatic transport line (2), through which the granular material is transported by a transport gas inside the container, and an outlet opening (18) for said pneumatic transport line (2), through which said transport gas is discharged from said container (11),
- a filter (20) which is provided inside said container between said inlet opening (17) and said outlet opening (18) in order to separate said granular material from said transport gas and to retain it in said container (11), said filter (20) having a tubular configuration which extends from said outlet opening (18) towards the interior of said container (11),
**characterized in that** said container (11) comprises:
- a first ring (14) which forms a first portion of a lateral wall of the container (11) and in which said outlet opening (18) is formed,
- a second ring (15) which forms a second portion of the lateral wall of the container (11) and on which said inlet opening (17) is formed,
wherein said first ring (14) and said second ring (15) are fixed to each other so as to allow a plurality of different angular positionings with respect to said first ring (14) and said second ring (15).

2. Device according to claim 1, wherein said filter (20) is fixed so as to be supported on the container at end regions (22, 23) of said filter (20) longitudinally opposite one to another.

3. Device according to claim 1 or 2, wherein the filter (20) comprises a support structure (21) and a filtering net (25) which is fixed to said support structure, said support structure (21) extending so as to pass inside said container (11) between said outlet opening (18) and a wall of said container (11) opposite said outlet opening (18).

4. Device according to claim 3, wherein said support structure (21) extends inside the container (11) between the outlet opening (18) and a support opening (19) which is formed on said container (11) and through which said support structure (21) is received so as to pass through.

5. Device according to claim 4, wherein said filter (20) is insertable in said container (11) and extractable from said container (11) through said support opening (19).

6. Device according to any one of the preceding claims, wherein said filter (20) has a substantially cylindrical tubular configuration with a circular cross-section.

7. Device according to any one of the preceding claims, wherein there is positioned inside said filter (20) a cleaning device (27) which is configured to clean a filtering net (25) of said filter.

8. Device according to claim 7, wherein said cleaning device (27) comprises at least one blowing element which is connected to a compressed air circuit and which includes a drilled pipe (28) which extends axially inside the filter (20).

9. Pneumatic transport plant (1) for granular material, comprising a pneumatic transport line (2) and a separation device (10) for granular material which is arranged in said pneumatic transport line (2), wherein said separation device (10) for granular material is constructed according to any one of the preceding claims.
